# EUROPEAN PATENT SPECIFICATION

(11) **EP 1 464 931 B1**
(45) Date of publication and mention of the grant of the patent: **11.01.2012**
(21) Application number: 04300155.1
(22) Date of filing: 19.03.2004
(51) Int. Cl.: G01F 3/22

(54) **Bellows gas meter**
Balgengaszähler
Compteur de gaz à soufflets

(30) Priority: 01.04.2003 DE 10314638
(43) Date of publication of application: 06.10.2004
(73) Proprietor: Actaris Gaszählerbau GmbH, 76185 Karlsruhe (DE)
(72) Inventor: Stuck, Otfried, 76448 Durmersheim (DE)
(74) Representative: Feray, Valérie

(56) References cited:
- GB-A- 504 427
- GB-A- 545 636
- US-A- 3 119 264

## Description

The invention relates to a bellows gas meter according to claim 1.

Bellows gas meters have a housing with two chambers, which are each divided into two measuring spaces by a diaphragm. In this case, the diaphragms are coupled to the common shaft of a measuring unit in each case via a linkage, with the result that the diaphragm displacement is transmitted to the shaft via the linkage, so that measurements can be taken. At the same time, a valve device is also actuated as a result, via which gas is directed in an alternating manner into one measuring space and the other of each chamber in dependence on the diaphragm displacement, while the respectively other measuring space is connected to an outlet. This takes place such that each diaphragm executes a back and forth movement, the movement of the diaphragms being phase-displaced in relation to one another, with the result that the common shaft is correspondingly, is kept rotating.

DE 38 33 035 C2 or DE 100 61 029 A1, for example, disclose valve devices for this purpose which has slides, arranged from beside the other or one behind the other, with complex diversions in the form of a channel system for the inflowing and outflowing gas, with the result that utilization of space is not optimal and a corresponding loss in pressure occurs, and which are actuated via relatively complicated linkages. These valve devices, furthermore, are relatively sensitive on account of the complicated linkage.

EP 0 390 934 B1, DE 195 01 858 A1, DE 37 07 164 C1 and GB 545 636 disclose similar designs for a bellows gas meter which has corresponding disadvantages.

DE 210 658 discloses a bellows gas meter in which the gas is supplied to the measuring chambers via channels which are accommodated radially one behind the other in two opposite quadrants of a rotary valve plate.

The object of the invention is to provide a bellows gas meter according to Claim 1 which has better utilization of space and a more straightforward, robust design.

This object is achieved according to the features of Claim 1.

Further configurations of the invention can be gathered from the following description and the subclaims.

The invention is explained in more detail hereinbelow with reference to an exemplary embodiment illustrated in the attached drawings, in which:
Fig. 1 shows, schematically, a bellows gas meter,

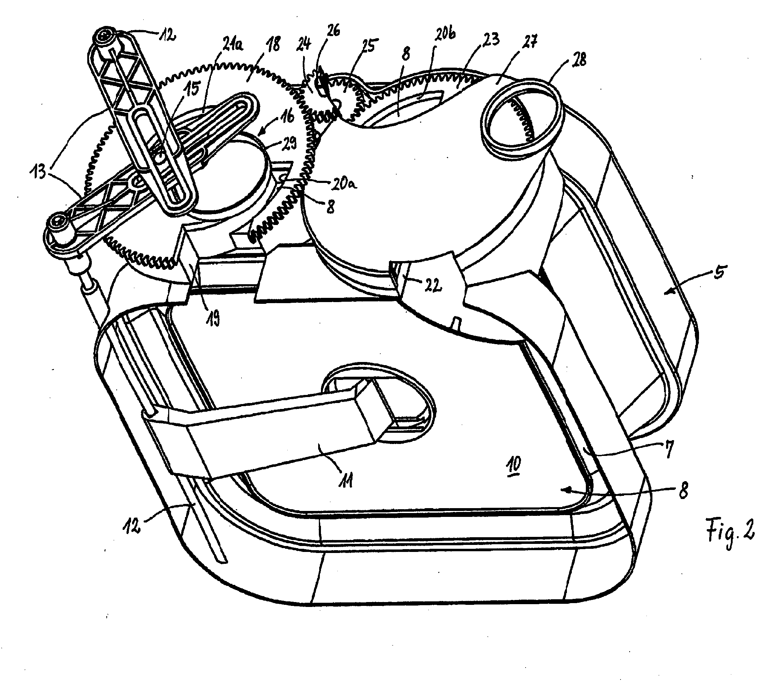

Fig. 2 shows an embodiment of a bellows gas meter partly in perspective and partly in cut-away form,

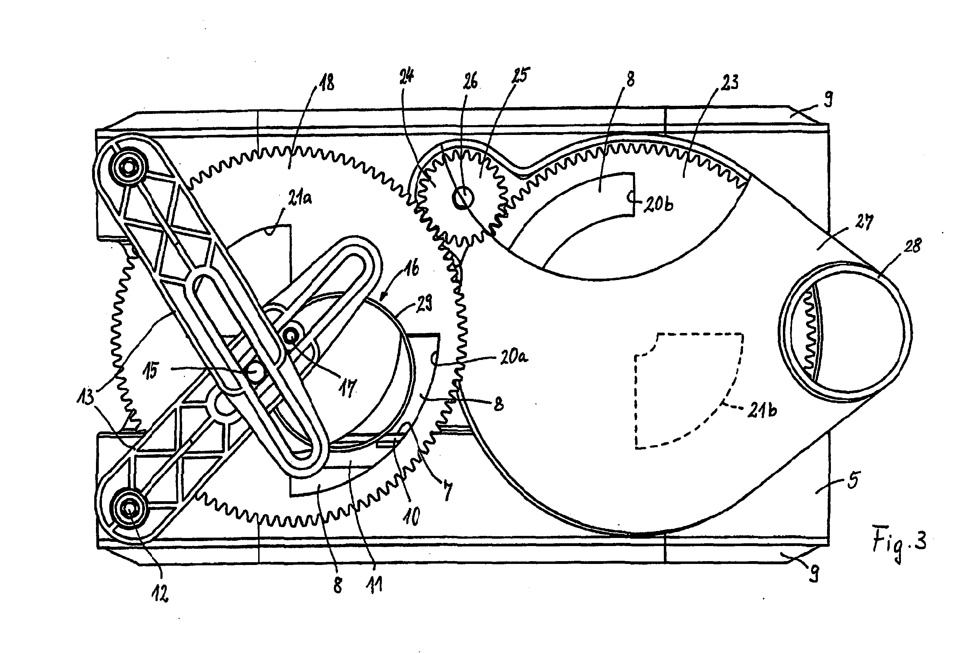

Fig. 3 shows the bellows gas meter from Fig. 2 in plan view and likewise in partly cut-away form,
Fig. 4 shows a plan view of two bellows gas meters from Fig. 2 in the assembled state, and
Fig. 5 shows a further exemplary embodiment of a slot.

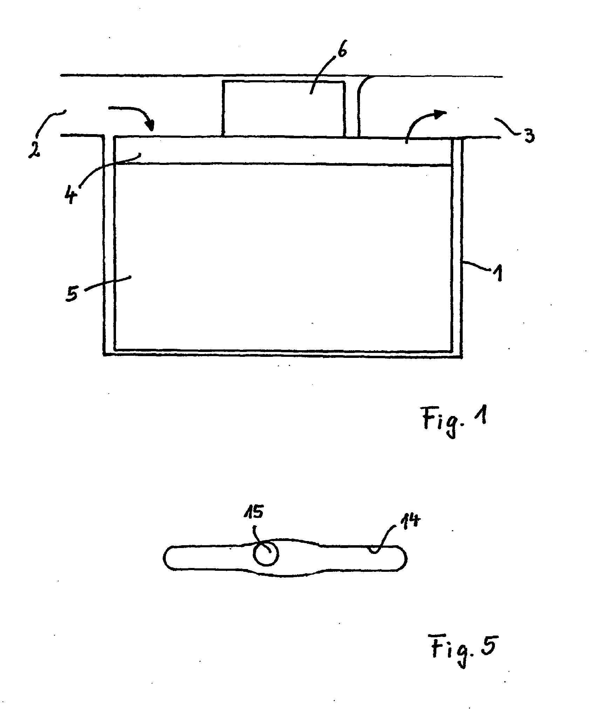

According to Fig. 1, a bellows gas meter comprises a schematically indicated fire-resistant outer housing 1 which is made of sheet metal, and has an inlet 2 and an outlet 3, and also comprises an inner housing 5, provided with a valve device 4, and a counting mechanism 6, although it is also possible for the latter to be arranged outside the outer housing 1. The inner housing 5, which is, in particular, a plastic housing, comprises two chambers which are arranged adjacent to one another and are separated by a central wall. Each chamber is divided into two measuring spaces 8 by a movable diaphragm 7, which is fastened along its circumference in the respective chamber of the inner housing 5, a cover 9 being positioned on the inner housing 5 from the outside in each case.

Each diaphragm 7 bears a rigid plate 10, on which is articulated a lever 11 which is connected in a rotationally fixed manner to a rod 12, which is mounted in the inner housing 5 and extends perpendicularly to the lever 11. The rod 12 is thus rotated in accordance with the diaphragm displacement, brought about the difference in pressure in the two chambers separated by the respective diaphragm 7.

At an end which projects out of the inner housing 5, the respective rod 12, which rotates back and forth in accordance with the diaphragm displacement, is provided with an arm 13 extending perpendicularly to the rod 12. The arms 13, which can be pivoted via the rod 12, each have a slot 14, the slots 14 extending in the direction of the longitudinal axes of the arms 13, crossing over one another and, together, accommodating a pin 15 of a crank 16. The crank 16 is connected in a rotationally fixed manner to a shaft 17. In accordance with the displacement of the two diaphragms 7, the crank 16, and thus the shaft 17, is thus rotated via the two arms 13.

The rotation of the crank 16 causes an inlet-side valve plate 18 of the valve device 4, said valve plate being connected to the shaft 17, to be rotated along with it. The valve plate 18 is arranged in a rotatable manner in relation to the inner housing 5, via an inlet connector 19 of the latter leading to the two chambers of the inner housing 5, and has two openings 20, 21 which have a virtually identical surface area and are arranged radially one behind the other in a circle-sector region. In this case, the opening region of the two openings 20a, 21a extends over 90° in each case (or an angle somewhat greater than 90°) and the openings 20a, 21a are separated from one another by approximately 90° in the circumferential direction, i.e. are located opposite one another in relation to the shaft 17. Furthermore, the opening 20a is provided adjacent to the outer border and the opening 21a is provided adjacent to the shaft 17. By means of the rotating valve plate 18, gas flowing in via the openings 20a, 21a is thus divided between the two chambers of the inner housing 5, this bringing about a corresponding diaphragm displacement, which, for its part, results in rotation of the valve plate 18.

The inner housing 5 also has an outlet connector 22, over which is arranged an outlet-side valve plate 23, which is of identical construction to the inlet-side valve plate 18 and has corresponding openings 20b, 21b. However, the outlet-side valve plate 23 has been rotated through 180° in relation to the inlet-side valve plate 18, with the result that the openings 20a, 21a and 20b, 21b are offset through 180° in relation to one another. The two valve plates 18, 23 are offset in height in relation to one another and coupled to one another in a rotatable manner. In the case of the embodiment illustrated, the two valve plates 18, 23 are provided with an encircling toothing arrangement, which engages with a respective pinion 24 or 25. The pinions 24, 25 are of equal size and are arranged coaxially one above the other on a common shaft 26. Accordingly, rotation of the inlet-side valve plate 18 results in identical rotation of the outlet-side valve plate 23.

The arrangements of the openings 20a, 21a, 20b, 21b ensures the circulatory movement of the valve plate 18, 23 since in the diaphragm 7 of one chamber is in a dead-centre position, the other is offset through 90°.

Instead of the toothed gear mechanism used in this way, it is also possible to use a belt drive or the like for coupling valve plates 18, 23 in a rotatable manner.

The outlet-side valve plate 23 of the associated pinion 25 is sealed in relation to the interior of the outer housing 1 via a hood-like outlet covering 27 connected in a sealed manner to the outlet connector 22, i.e. the shaft 26 is also guided in a sealed manner through the outlet covering 27. The outlet covering 27 has an outlet connector 28 which leads to the outlet 3 of the outer housing 1 or forms the same. The inlet side of the outer housing 1 is thus separated from the outlet side in terms of pressure.

The counting mechanism 6 may be actuated, for example, via the common shaft 26, although it is also possible to provide a separate pinion which engages with the valve plate 18 or the pinion 24 and transmits the movement to the counting mechanism 6.

In the exemplary embodiment illustrated, the crank 16 comprises a bimetallic strip 29 which serves for bringing about temperature compensation. In this case, the bimetallic strip 29 is located essentially over the opening 20a of the valve plate 18 and rotates therewith. The bimetallic strip 29 thus has the inflowing gas flowing around it on a permanent basis, so that the temperature compensation takes place virtually instantaneously, as a result of which incorrect measurements are avoided.

If the bimetallic strip 29 is not used, i.e. no such temperature compensation is to be carried out, the crank pin 15 may be arranged directly on the inlet-side valve plate 18. However, for the purpose of achieving better force transmission, it is preferred to use a carry-along disc which is separate from the inlet-side valve plate 18.

Quick start-up of the bellows gas meter results in a pressure surge, although the counting mechanism does not respond to this. For this purpose, the outlet-side valve plate 23 is expediently arranged with axial play beneath the outlet covering 27, with the result that it can lift up briefly under the action of the pressure surge, so that the pressure surge dissipates without moving the diaphragm 7. In this case, correspondingly, the outlet-side valve plate 23 acts as a pressure relief valve.

The inlet and outlet valve formed via the valve plates 18, 23 are separate from one another, straightforward and robust, especially as identical valve plates can be used. The valve plates 18, 23 may be made of plastic, although it is also possible, on account of their straightforward design, for them to consist of more wear-resistant ceramic material and/or to be designed as noise-reducing sandwich plates.

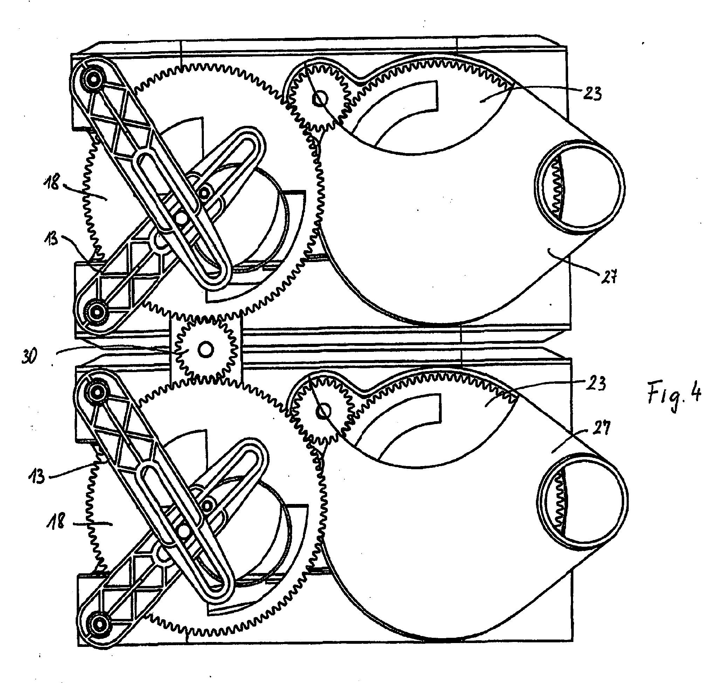

As is illustrated in Fig. 4, it is readily possible, in the case of such a configuration of the bellows gas meter, for two or more parallel measuring units to be coupled to one another in order to achieve higher levels of throughflow or lower throughflow loading, use being made of an intermediate gearwheel 30 in order to synchronize the inlet-side valve plates 18, 23 with another, in particular to couple the inlet-side valve plates 18 to one another.

The slots 14 are expediently optimized in order to achieve optimal opening characteristics, i.e. they are widened, for example, in the central region, in order to produce a kind of hysteresis in relation to the movement of the crank piece 15, which moves along one side of the slot 14 in one movement direction of the diaphragm 7 and moves along the other side of the slot 14 in the other movement direction of the diaphragm 7, see Figure 5.

## Claims

1. Bellows gas meter having an inlet (2), an outlet (3) and an inner housing (5) with two chambers, which are each divided into two measuring spaces (8) by a diaphragm (7), and having a valve device (4) by means of which the measuring spaces (8) are connected to the inlet (2) and outlet (3) in a manner which alternates in dependence on the diaphragm displacement, it being possible for the phase-displaced movement of the two diaphragms (7) to be transmitted to a measuring unit (G), **characterized in that** the valve device (4) has a rotatable inlet-side and a rotatable outlet-side valve plate (18, 23) and these, on the inlet and outlet sides, have in each case two pairs of openings (20a, 21a, 20b, 21b) which lead to the two respective measuring spaces (8) of a chamber and are located opposite one another in relation to the respective axis of rotation (17) of the valve plate (18, 23), an opening (20a, 20b) adjacent to the outer border and an opening (21a, 21b) adjacent to the axis of rotation (17) being arranged radially one behind the other in a circle-sector region, and the two valve plates (18, 23), which are offset through 180° in respect of their. openings (20a, 21a, 20b, 21b), are coupled to one another in a rotatable manner, it being possible for the inlet-side valve plate (1.8) to be rotated in circulation in accordance with the diaphragm displacement, and the opening region of the openings (20a, 21a, 20b, 21b) of the valve plates (18, 23) extending in each case over approximately 90°.

2. Bellows gas meter according to Claim 1, **characterized in that** the valve plates (18, 23) are toothed around the circumference and are coupled to one another via at least one pinion (24, 25).

3. Bellows gas meter according to Claim 1 or 2, **characterized in that** the inlet-side valve plate (18) can be rotated by means of a crank (16) which engages with a respective slot (14) of a lever arm (13), which can be pivoted in accordance with respective diaphragm displacement.

4. Bellows gas meter according to Claim 3, **characterized in that** the inlet-side valve plate (18) can be rotated via a carry-along element of the crank (16).

5. Bellows gas meter according to Claim 3 or 4, characterize in that the slot (14) is shaped in accordance with predetermined valve-opening characteristics.

6. Bellows gas meter according to one of Claims 1 to 5, **characterized in that** arranged over the outlet-side valve plate (23) is a hood-like outlet covering (27.), within which the outlet-side valve plate (23) is arranged with axial play.

7. Bellows gas meter according to one of Claims 1 to 6, **characterized in that** the openings are arranged identically in the inlet-side and outlet-side valve plates (18, 23).

8. Bellows gas meter according to Claim 7 **characterized in that** the inlet-side and outlet-side valve plates (18, 23) are of identical design.

9. Bellows gas meter according to one of Claims 1 to 8, **characterized in that** the inlet-side and outlet-side valve plates (18, 23) are arranged on a respective inlet or outlet connector (19, 22) of the inner housing (5).

10. Bellows gas meter according to one of Claims 1 to 9, **characterized in that** the openings (20a, 21a, 20b, 21b) of the valve plates (18, 23) extend over an angle range 90°.

11. Bellows gas meter according to one of Claims 1 to 10, **characterized in that** a temperature-compensation member (29) is interposed in the kinematic chain from the diaphragm (7) to the inlet-side valve plate (18).

12. Bellows gas meter according to Claim 11, **characterized in that** the temperature-compensation member (29) is a bimetallic strip.

13. Bellows gas meter according to Claim 11 or 12, **characterized in that** the temperature compensation member (29) is part of a crank (16) which rotates the inlet-side valve plate (18).

14. Bellows gas meter according to one of Claims 1 to 13, **characterized in that** two or more inner housings (5) with valve device (4) are arranged one behind the other, the valve plates (18) being synchronized with one another via an intermediate gearwheel (30).

15. Bellows gas meter according to one of Claims 1 to 14, **characterized in that** the valve plates (18, 23) are plastic plates.

16. Bellows gas meter according to one of Claims 1 to 14, **characterized in that** the valve plates (18, 23) are ceramic plates.

17. Bellows gas meter according to one of Claims 1 to 16, **characterized in that** the valve plates (18, 23) arc sandwich plates.

## Patentansprüche

1. Balgengaszähler mit einem Einlass (2), einem Auslass (3) und einem Innengehäuse (5) mit zwei Kammern, die über eine Membran (7) jeweils in zwei Messräume (8) unterteilt sind, und mit einer Ventilvorrichtung (4), über die die Messräume (8) derart mit dem Einlass (2) und dem Auslass (3) verbunden sind, dass die Verbindung je nach Versatz der Membran alterniert, wobei es möglich ist, dass die phasenversetzte Bewegung der beiden Membranen (7) an eine Messeinheit (6) übertragen wird, **dadurch gekennzeichnet, dass** die Ventilvorrichtung (4) eine drehbare einlassseitig angeordnete und eine drehbare auslassseitig angeordnete Ventilplatte (18, 23) aufweist und diese auf der Einlass- und Auslassseite jeweils zwei Paare von Öffnungen (20a, 21a, 20b, 21b) haben, die zu den beiden entsprechenden Messräumen (8) der Kammer führen und in Bezug auf die jeweilige Drehachse (17) der Ventilplatte (18, 23) einander gegenüberliegend angeordnet sind, wobei eine Öffnung (20a, 20b) benachbart der Außengrenze und eine Öffnung (21a, 21b) benachbart der Drehachse (17) in einer Kreissektorregion radial hintereinander angeordnet sind, und die beiden Ventilplatten (18, 23), die in Bezug auf ihre Öffnungen (20a, 21a, 20b, 21b) um 180° versetzt sind, drehbar miteinander verbunden sind, wobei es möglich ist, dass die einlassseitige Ventilplatte (18) zirkulierend gemäß dem Membranversatz gedreht wird, und wobei sich der Öffnungsbereich der Öffnungen (20a, 21a, 20b, 21b) der Ventilplatten (18, 23) jeweils über ungefähr 90° erstreckt.

2. Balgengaszähler nach Anspruch 1, **dadurch gekennzeichnet, dass** die Ventilplatten (18, 23) um den Umfang herum gezahnt und über zumindest ein Ritzel (24, 25) miteinander verbunden sind.

3. Balgengaszähler nach Anspruch 1 oder 2, **dadurch gekennzeichnet, dass** die einlassseitige Ventilplatte (18) über eine Kurbel (16) gedreht werden kann, die mit einem entsprechenden Schlitz (14) eines Hebelarmes (13) in Eingriff gelangt, der gemäß dem jeweiligen Membranversatz geschwenkt werden kann.

4. Balgengaszähler nach Anspruch 3, **dadurch gekennzeichnet, dass** die einlassseitige Ventilplatte (18) über ein Mitnahmeelement der Kurbel (16) gedreht werden kann.

5. Balgengaszähler nach Anspruch 3 oder 4, **dadurch gekennzeichnet, dass** der Schlitz (14) gemäß vordefinierten Ventilöffnungseigenschaften geformt ist.

6. Balgengaszähler nach einem der Ansprüche 1 bis 5, **dadurch gekennzeichnet, dass** eine kapuzenförmige Auslassabdeckung (27) über der auslassseitigen Ventilplatte (23) angeordnet ist, in welcher Auslassabdeckung (27) die auslassseitige Ventilplatte (23) mit Axialspiel angeordnet ist.

7. Balgengaszähler nach einem der Ansprüche 1 bis 6, **dadurch gekennzeichnet, dass** die Öffnungen in den einlassseitigen und auslassseitigen Ventilplatten (18, 23) identisch angeordnet sind.

8. Balgengaszähler nach Anspruch 7, **dadurch gekennzeichnet, dass** die einlassseitigen und auslassseitigen Ventilplatten (18, 23) ein identisches Design aufweisen.

9. Balgengaszähler nach einem der Ansprüche 1 bis 8, **dadurch gekennzeichnet, dass** die einlassseitigen und auslassseitigen Ventilplatten (18, 23) auf einem entsprechenden Einlass- oder Auslassverbindungselement (19, 22) des Innengehäuses (5) angeordnet sind.

10. Balgengaszähler nach einem der Ansprüche 1 bis 9, **dadurch gekennzeichnet, dass** sich die Öffnungen (20a, 21a, 20b, 21b) der Ventilplatten (18, 23) über einen Winkelbereich von > 90° erstrecken.

11. Balgengaszähler nach einem der Ansprüche 1 bis 10, **dadurch gekennzeichnet, dass** ein Temperaturausgleichselement (29) in der kinematischen Kette von der Membran (7) bis zur einlassseitigen Ventilplatte (18) zwischengeschaltet ist.

12. Balgengaszähler nach Anspruch 11, **dadurch gekennzeichnet, dass** es sich beim Temperaturausgleichselement (29) um einen Bimetallstreifen handelt.

13. Balgengaszähler nach Anspruch 11 oder 12, **dadurch gekennzeichnet, dass** das Temperaturausgleichselement (29) Teil der Kurbel (16) ist, die die einlassseitige Ventilplatte (18) dreht.

14. Balgengaszähler nach einem der Ansprüche 1 bis 13, **dadurch gekennzeichnet, dass** zwei oder mehrere Innengehäuse (5) mit Ventilvorrichtung (4) hintereinander angeordnet sind, wobei die Ventilplatten (18) über ein Zwischengetrieberad (30) miteinander synchronisiert sind.

15. Balgengaszähler nach einem der Ansprüche 1 bis 14, **dadurch gekennzeichnet, dass** es sich bei den Ventilplatten (18, 23) um Kunststoffplatten handelt.

16. Balgengaszähler nach einem der Ansprüche 1 bis 14, **dadurch gekennzeichnet, dass** es sich bei den Ventilplatten (18, 23) um Keramikplatten handelt.

17. Balgengaszähler nach einem der Ansprüche 1 bis 16, **dadurch gekennzeichnet, dass** es sich bei den Ventilplatten (18, 23) um Sandwichplatten handelt.

## Revendications

1. Compteur à gaz à soufflet comportant une entrée (2), une sortie (3) et un logement interne (5) avec deux chambres, qui sont divisées chacune en deux espaces de mesure (8) par une membrane (7), et comportant un dispositif de valve (4) au moyen duquel les espaces de mesure (8) sont reliés à l'entrée (2) et à la sortie (3) d'une manière qui alterne en fonction du déplacement de la membrane, le mouvement de déplacement en phase des deux membranes (7) pouvant être transmis à une unité de mesure (6), **caractérisé en ce que** le dispositif de valve (4) comporte une plaque de valve rotative côté entrée et une plaque de valve rotative côté sortie (18, 23) et celles-ci, des côtés d'entrée et de sortie, comportent dans chaque cas deux paires d'ouvertures (20a, 21a, 20b, 21b) qui mènent aux deux espaces de mesure (8) respectifs d'une chambre et sont situées l'une en face de l'autre par rapport à l'axe de rotation (17) respectif de la plaque de valve (18, 23), une ouverture (20a, 20b) adjacente à la limite extérieure et une ouverture (21a, 21b) adjacente à l'axe de rotation (17) étant agencées radialement l'une derrière l'autre dans une région de secteur de cercle, et les deux plaques de valve (18, 23), qui sont décalées de 180° en ce qui concerne leurs ouvertures (20a, 21a, 20b, 21b), sont couplées l'une à l'autre d'une manière rotative, la plaque de valve côté entrée (18) pouvant être tournée en circulation en fonction du déplacement de membrane, et la région d'ouverture des ouvertures (20a, 21a, 20b, 21b) des plaques de valve (18, 23) s'étendant dans chaque cas sur environ 90°.

2. Compteur à gaz à soufflet selon la revendication 1, **caractérisé en ce que** les plaques de valve (18, 23) sont dentées autour de la circonférence et sont couplées l'une à l'autre par l'intermédiaire d'au moins un pignon (24, 25).

3. Compteur à gaz à soufflet selon la revendication 1 ou 2, **caractérisé en ce que** la plaque de valve côté entrée (18) peut être tournée au moyen d'une manivelle (16) qui vient en prise avec une fente (14) respective d'un bras de levier (13), qui peut être pivoté en fonction du déplacement de membrane respectif.

4. Compteur à gaz à soufflet selon la revendication 3, **caractérisé en ce que** la plaque de valve côté entrée (18) peut être tournée par l'intermédiaire d'un élément d'entraînement de la manivelle (16).

5. Compteur à gaz à soufflet selon la revendication 3 ou 4, **caractérisé en ce que** la fente (14) est formée conformément à des caractéristiques d'ouverture de valve prédéterminée.

6. Compteur à gaz à soufflet selon l'une des revendications 1 à 5, **caractérisé en ce qu'**un élément de recouvrement de sortie de type capot (27), dans lequel la plaque de valve côté sortie (23) est agencée avec un jeu axial, est agencé sur la plaque de valve côté sortie (23).

7. Compteur à gaz à soufflet selon l'une des revendications 1 à 6, **caractérisé en ce que** les ouvertures sont agencées identiquement dans les plaques de valve côté entrée et côté sortie (18, 23).

8. Compteur à gaz à soufflet selon la revendication 7, **caractérisé en ce que** les plaques de valve côté entrée et côté sortie (18, 23) sont de conception identique.

9. Compteur à gaz à soufflet selon l'une des revendications 1 à 8, **caractérisé en ce que** les plaques de valve côté entrée et côté sortie (18, 23) sont agencées sur un raccord d'entrée ou de sortie (19, 22) respectif du logement interne (5).

10. Compteur à gaz à soufflet selon l'une des revendications 1 à 9, **caractérisé en ce que** les ouvertures (20a, 21a, 20b, 21b) des plaques de valve (18, 23) s'étendent sur une plage angulaire > 90°.

11. Compteur à gaz à soufflet selon l'une des revendications 1 à 10, **caractérisé en ce qu'**un élément de compensation de température (29) est interposé dans la chaîne cinématique de la membrane (7) à la plaque de valve côté entrée (18).

12. Compteur à gaz à soufflet selon la revendication 11, **caractérisé en ce que** l'élément de compensation de température (29) est un bilame.

13. Compteur à gaz à soufflet selon la revendication 11 ou 12, **caractérisé en ce que** l'élément de compensation de température (29) fait partie d'une manivelle (16) qui fait tourner la plaque de valve côté entrée (18).

14. Compteur à gaz à soufflet selon l'une des revendications 1 à 13, **caractérisé en ce que** deux logements internes (5) ou plus avec un dispositif de valve (4) sont agencés l'un derrière l'autre, les plaques de valve (18) étant synchronisées l'une avec l'autre par l'intermédiaire d'un pignon intermédiaire (30).

15. Compteur à gaz à soufflet selon l'une des revendications 1 à 14, **caractérisé en ce que** les plaques de valve (18, 23) sont des plaques en matière plastique.

16. Compteur à gaz à soufflet selon l'une des revendications 1 à 14, **caractérisé en ce que** les plaques de valve (18, 23) sont des plaques en céramique.

17. Compteur à gaz à soufflet selon l'une des revendications 1 à 16, **caractérisé en ce que** les plaques de valve (18, 23) sont des plaques sandwich.
